# EUROPÄISCHE PATENTSCHRIFT

(11) **EP 0 480 159 B1**
(45) Veröffentlichungstag und Bekanntmachung des Hinweises auf die Patenterteilung: **14.12.1994**
(21) Anmeldenummer: 91114416.0
(22) Anmeldetag: 28.08.1991
(51) Int. Cl.: B62D 5/04, B62D 1/16, B62D 5/18

(54) **Vorrichtung zur Erzeugung eines überlagerten Lenkkorrektureingriffs**
Device for the introduction of a steering compensation
Dispositif pour l'introduction d'une correction de direction

(30) Priorität: 12.10.1990 DE 4032406
(43) Veröffentlichungstag der Anmeldung: 15.04.1992
(73) Patentinhaber: ROBERT BOSCH GMBH, 70442 Stuttgart (DE)
(72) Erfinder: Rapp, Uwe, Dipl.-Ing. (FH), W-7140 Ludwigsburg (DE)

(56) Entgegenhaltungen:
- EP-A- 0 317 390
- DE-A- 3 211 748
- US-A- 1 467 209
- US-A- 4 067 247

## Beschreibung

### Stand der Technik

Die Erfindung geht aus von einer Vorrichtung nach dem Oberbegriff des Anspruchs 1.

Gelegentlich ergeben sich Fahrsituationen bei Kraftfahrzeugen im dynamischen Ablauf, die eine Beeinflussung des Radeinschlagwinkels bei einer Achse, gleichgültig ob es sich hier um die Vorder- oder die Hinterachse handelt, zur Aufrechterhaltung von Fahrstabilität oder Spurhaltung erforderlich machen, und zwar unabhängig davon, wie sich eine das Kraftfahrzeug in diesem Moment lenkende Person verhält. Mit anderen Worten: Durch vorgegebene Sensoren, die den jeweiligen Betriebszustand des Kraftfahrzeugs erfassen, wird über geeignete Steller beispielsweise für einen überlagerten, also zusätzlichen aktiven Vorderrad-Lenkeingriff gesorgt. Bekannte Lenkkorrektureinrichtungen dieser Art lassen sich beispielsweise entnehmen aus US-A-3,716,110 sowie dem Aufsatz von De Benito et al. "Dynamically Decoupled Steering" Seiten 1527-1543, Proceedings Vol. II, ISATA 89, Florence, Italy. Vergleichbare zusätzliche Steuerungen, die ebenfalls aufgrund selbsttätiger Erfassung des Fahrzustands reagieren und beispielsweise die Hinterachse in ihrem Lenkverhalten beeinflussen, lassen sich ergänzend noch entnehmen aus US-A-4,440,254.

Eine Vorrichtung der eingangs genannten Art zur Erzeugung eines überlagerten Lenkungseingriffs bei einer von Hand steuerbaren Achse eines Kraftfahrzeugs ist aus US-A-4,067,247 bekannt. Diese Vorrichtung weist eine Schiebehülse auf, mit welcher eine Unterbrechung einer Lenkwelle überbrückt ist. Die Schiebehülse ist axial verschiebbar auf der Lenkwelle gelagert sowie mit den zugewandten Lenkwellenenden verbunden, und zwar mit dem lenkradseitigen Wellenende durch eine lediglich Axialbewegungen zulassende Geradführung, während die Verbindung zum lenkgetriebeseitigen Wellenende aus zapfenähnlichen Eingriffsgliedern der Hülse in Wendelnuten des Wellenendes besteht, so daß eine Axialbewegung der Hülse eine Relativverdrehung der beiden Lenkwellenhälften bewirkt. Die Axialbewegung der Schiebehülse ist mittels eines auf der lenkradseitigen Lenkwellenhälfte angeordneten, eine Drehbewegung in eine Axialbewegung wandelnden Spindeltriebs erzeugbar, wobei zwischen diesem und der Schiebehülse Teleskopdämpfer angeordnet sind. Diese unterdrücken bei langsamen Drehbewegungen des Lenkrads eine Axialbewegung der Schiebehülse, bei schnellen Drehbewegungen weisen sie jedoch einen winkelgeschwindigkeitsabhängigen Dämpfungswiderstand auf, so daß eine Axialbewegung des Spindeltriebs auf die Schiebehülse übertragen wird. Die Teleskopdämpfer wirken also als winkelgeschwindigkeitsabhängig selbsttätig schaltende Übertragungsglieder für Axialbewegungen.

Der Erfindung liegt die Aufgabe zugrunde, eine aktive Lenkkorrektureinrichtung fehlersicher so auszubilden, daß die mechanische Koppelung beispielsweise zwischen einem Lenkrad und den Rädern grundsätzlich immer gegeben ist und insbesondere dann sichergestellt ist, wenn aus irgendwelchen Gründen Teile der zusätzlichen Lenkkorrektureinrichtung ausfallen, andererseits aber eine Relativverdrehung beispielsweise einer der Fahrzeugachse zugewandten Lenkwellenhälfte zur zugeordneten, gegenüberliegenden und vom Fahrer beeinflußten Lenkwellenhälfte ermöglicht wird.

### Vorteile der Erfindung

Die erfindungsgemäße Vorrichtung löst diese Aufgabe mit dem kennzeichnenden Merkmal des Anspruchs 1 und hat den Vorteil, daß in der mechanischen Übertragung von Momenten beispielsweise bei einer zu einer Vorderachse führenden Lenkwelle kein Spiel auftritt, also sichergestellt ist, daß die mechanische Koppelung beispielsweise zwischen einem willkürlich betätigten Lenkrad und den Rädern der Vorderachse grundsätzlich aufrechterhalten bleibt, andererseits ein von einer Steuerung oder Regelung vorgegebener Lenkkorrekturwinkel an den Rädern eingestellt werden kann, wie es zur Beherrschung der jeweiligen Fahrsituation erforderlich ist. Dabei zeichnet sich die erfindungsgemäße Lösung durch besondere Einfachheit aus mit leicht zu realisierender Begrenzung des Stellwinkels und mit dem weiteren wesentlichen Vorteil, daß bei beliebigem Ausfall im Steller- oder Ansteuerungsbereich für die Lenkkorrektureinrichtung, also beispielsweise Ausfall des Aktuators und/oder der zugehörigen Regelung die Lenkfunktion ohne jede Störung oder etwa bremsenden Eingriff aufrechterhalten bleibt.

Durch die in den Unteransprüchen aufgeführten Maßnahmen sind vorteilhafte Weiterbildungen und Verbesserungen der Erfindung möglich.

Besonders vorteilhaft ist die hülsenartige Ausbildung eines zwischen sich eine Unterbrechung aufweisende Lenkwellenhälften verbindenden Kupplungsgliedes, welches in einem zugewandten Lenkwellenende axial verschieblich, jedoch drehfest und in dem anderen sowohl axial verschieblich als auch relativ zum aufgenommenen Lenkwellenende verdrehbar ausgebildet ist, jedoch bei letzterem durch eine Schrägschlitz-/Stegverbindung gefesselt abläuft. Hier wäre natürlich auch ein koppelnder Eingriff über eine gegenseitige Schrägverzahnung möglich.

Eine großserienerprobte Art von verschiebbaren Drehmomentübertragungselementen wären ferner die von in geneigten Laufbahnen mit Halbkreisprofil ausgebildeten Systeme, ähnlich wie in Gleichlaufverschiebegelenken bei Kraftfahrzeugantriebswellen. Vorteile bei diesen sind bekannte Fertigungstechnik, lange Lebensdauer und Zuverlässigkeit.

Für die Axialverschiebung der hohlwellenartig ausgebildeten Schiebehülse kann eine Zahnstange in Frage kommen.

### Zeichnung

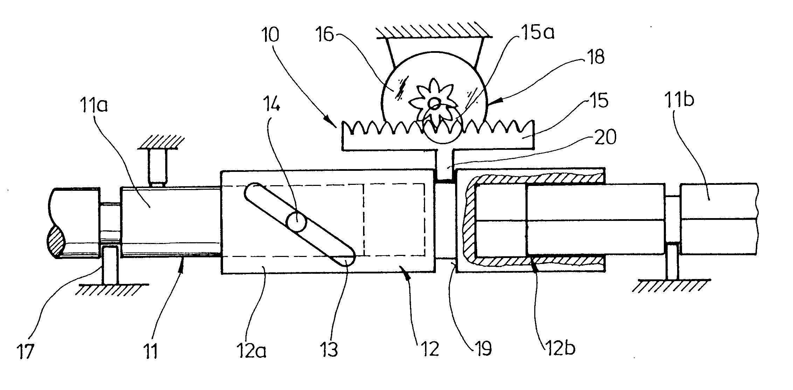

Ein Ausführungsbeispiel der Erfindung ist in der Zeichnung dargestellt und wird in der nachfolgenden Beschreibung näher erläutert. Die Zeichnung zeigt schematisiert als Ausführungsbeispiel für die Durchführung eines überlagerten Korrektureingriffs bei einer Fahrzeuglenkung zwei aufeinander zu gerichtete Lenkwellenhälften, die durch eine Schiebehülse miteinander mechanisch und zur Durchführung einer relativen Drehbewegung verbunden sind.

### Beschreibung des Ausführungsbeispiels

Der Grundgedanke vorliegender Erfindung besteht darin, eine Relativverdrehung von zwei aufeinander zu gerichteten Lenkwellenhälften durch eine beide miteinander verbindende und vorzugsweise aufnehmende Schiebehülse nach Art einer Hohlwelle nur dann zuzulassen, wenn die Hohlwelle eine gleichzeitige Axialverschiebung durchführt, wozu sie von einem äußeren Aktuator angetrieben werden kann.

In der Zeichnung ist die mechanische Verstelleinrichtung, die beispielsweise in eine Lenksäule eingebaut, eine zusätzliche überlagerte Verdrehung derselben unabhängig vom Lenkradwinkel zuläßt, mit 10 bezeichnet. Dabei ist darauf hinzuweisen, daß die Zeichnung bewußt einfach gehalten ist und es sich versteht, daß die Erfindung auch bei anderen, durch ihre Verdrehung eine Veränderung der Lenkposition herbeiführenden Wellen eingesetzt werden kann, beispielsweise wenn zusätzlich zum Radeinschlag der Vorderräder auch an der Hinterachse ein dann unterschiedlicher (geringerer) Radeinschlag gewünscht wird, was ebenfalls durch ein entsprechendes, von einer Lenkwelle angetriebenes Lenkgetriebe realisiert werden kann.

Im folgenden ist daher allgemein von einer Lenkwelle die Rede, bei der es sich bevorzugt um die Lenksäule für die Vorderradverstellung eines Kraftfahrzeugs handeln kann. Die obere, beispielsweise dem Lenkrad zugewandte Hälfte 11a der Lenkwelle 11 mit bei 17 in geeigneter Weise ausgebildeter, angedeuteter Lagerung läuft reibungsarm in einem ersten Hohlwellenabschnitt 12a einer Schiebehülse 12. Der Hohlwellenabschnitt 12a weist einen zur Lenkwellenlängsachse geneigten Schrägschlitz 13 auf. Über einen senkrecht zur Wellenachse angebrachten Querbolzen 14, der in den Schrägschlitz 13 hineinragt, ergibt sich eine Kopplung zwischen der ersten Lenkwellenhälfte 11a und der Schiebehülse 12, die ihrerseits durch einen geeigneten mechanischen Eingriff von einem Steller oder Aktuator 18 in axialer Richtung angetrieben werden kann, worauf weiter unten noch eingegangen wird.

Das andere Ende der Schiebehülse 12 bildet, jedenfalls bei dem dargestellten Ausführungsbeispiel, einen zweiten Hohlwellenabschnitt 12b aus, welcher der Aufnahme beispielsweise der der Fahrzeugachse zugewandten zweiten Lenkwellenhälfte 11b dient. Wesentlich ist hier, daß die Verbindung zwischen dem zweiten Hohlwellenbereich 12b der Schiebehülse 12 und der zugewandten Lenkwellenhälfte 11b drehfest, jedoch axial verschieblich getroffen ist, was problemlos durch eine entsprechende Unrundheit der zugewandten Komponenten oder durch sonstige Mittel, beispielsweise Gleitstein mit Nutführung, realisiert werden kann.

Man erkennt, daß eine Axialverschiebung der Schiebehülse 12 bei sonst nicht betätigter Lenkung notwendigerweise eine relative Verdrehung der einen Lenkwellenhälfte 11a zur anderen Lenkwellenhälfte 11b erzwingt, und zwar über die Schiefe-Ebene-Konfiguration des Schrägschlitzes 13 in Verbindung mit dem Führungsbolzen 14 oder durch eine entsprechende gegenseitige Schrägverzahnung.

Es versteht sich, daß die Axialverschiebung der Schiebehülse 12 in beliebiger Weise durchgeführt werden kann. Bei dem dargestellten Ausführungsbeispiel ist ein radialer Einschnitt 19 beispielsweise im massiven Übergangsbereich zwischen den beiden Hohlwellenteilen 12a, 12b vorgesehen, in welchen ein Gleitvorsprung 20 einer Zahnstange 15 eingreift. Die Zahnstange ist ihrerseits über eine bei 15a angedeutete selbsthemmende Verzahnung von einem geeigneten Steller 16 angetrieben, der beispielsweise ein hydraulischer oder elektrischer Aktuator sein kann und der von einer geeigneten Steuerung oder Regelung angesteuert wird, die aus erfaßten Fahrzeugbetriebsdaten einen gewünschten Lenkkorrekturwinkel errechnet und über die soeben geschilderte Korrekturmöglichkeit auch den jeweils zu beeinflussenden Rädern einer Achse mitteilt.

Die erfindungsgemäße Lenkkorrektureinrichtung ist deshalb fehlersicher, weil erkennbar bei Ausfall des Aktuators 16 von der selbsthemmend ausgelegten Verzahnung 15, 15a keine Verschiebung der Schiebehülse 12 mehr zugelassen wird, so daß auch keine Relativverdrehung der oberen zur unteren Lenkwellenhälfte 11a bzw. 11b möglich ist. Es ist daher für die Bedienungsperson bzw. den Fahrer möglich, bei nichtaktivem Lenkkorrektureingriff oder bei Ausfall des Aktuators 16 normal zu lenken. Die Begrenzung des Stellwinkels ergibt sich durch die Länge des Schrägschlitzes 13.

## Patentansprüche

1. Vorrichtung zur Erzeugung eines überlagerten Lenkkorrektureingriffs bei Vorder- und/oder Hinterachsen von Kraftfahrzeugen mit einer eine Unterbrechung einer Lenkwelle (11) überbrückenden Schiebehülse (12), welche axial verschiebbar auf der Lenkwelle gelagert und mit den zugewandten Lenkwellenenden verbunden ist sowie bei einer Axialverschiebung eine gleichzeitige Relativverdrehung der beiden Lenkwellenhälften (11a, 11b) herbeiführt, dadurch gekennzeichnet, daß ein von einer Steuerung oder Regelung aufgrund erfaßter Fahrzeugbetriebsdaten zur Lenkkorrektur angesteuerter, hydraulisch oder elektrisch ausgebildeter Aktuator (18) über ein selbsthemmendes Getriebe (15a) wenigstens mittelbar mit der Schiebehülse (12) in Eingriff steht.

2. Vorrichtung nach Anspruch 1, dadurch gekennzeichnet, daß die Schiebehülse (12) mit einem ersten Hohlwellenbereich (12a) eine erste zugewandte Lenkwellenhälfte (11a) aufnimmt und mit dieser mechanisch durch einen zur Lenkwellenlängsachse geneigten Schrägschlitz (13) und einen in den Schrägschlitz eingreifenden Führungsbolzen (14) in Wirkverbindung steht und mit einem zweiten, gegenüberliegenden Hohlwellenbereich (12b) die zweite zugewandte Lenkwellenhälfte (11b) drehfest, jedoch axial verschiebbar lagert.

3. Vorrichtung nach Anspruch 2, dadurch gekennzeichnet, daß der Schrägschlitz (13) aus der zylindrischen Wandung des ersten Hohlwellenbereichs (12a) der Schiebehülse (12) gearbeitet ist und der in den Schrägschlitz (13) eingreifende Führungsbolzen (14) senkrecht zur Wellenachse aus der ersten Lenkwellenhälfte (11a) heraustritt.

4. Vorrichtung nach Anspruch 2, dadurch gekennzeichnet, daß zwischen zweitem Hohlwellenbereich (12b) der Schiebehülse (12) und der zweiten zugewandten Lenkwellenhälfte (11b) eine unrunde Eingriffsbeziehung gebildet ist.

5. Vorrichtung nach einem der Ansprüche 1 bis 4, dadurch gekennzeichnet, daß zur Axialverschiebung ein Führungsstift (20) an einer Zahnstange (15) des Getriebes (15a) in eine Radialnut (19) der Schiebehülse (12) eingreift.

6. Vorrichtung nach Anspruch 1, dadurch gekennzeichnet, daß zur gleichzeitigen relativen Axialverschiebung und /-verdrehung zwischen Lenkwellenhälfte und Schiebehülse eine Schrägverzahnung vorgesehen ist.

## Claims

1. Device for producing a superimposed steering compensation at the front and/or rear axials of motor vehicles with a sliding sleeve (12) which bridges an interruption in a steering shaft (11) and is surmounted in an axially displaceable fashion on the steering shaft and is connected to the facing ends of the steering shaft and in the case of an axial displacement brings about a simultaneous relative rotation of the two steering shaft halves (11a, 11b), characterized in that an actuator (18) which is of hydraulic or electrical design and is driven by an open-loop or closed-loop control on the basis of detected vehicle operation data for steering compensation is in at least indirect engagement with the sliding sleeve (12) via a self-locking gearing (15a).

2. Device according to Claim 1, characterized in that the sliding sleeve (12) receives, with a first hollow shaft area (12a), a first facing steering shaft half (11a) and is operatively connected thereto in a mechanical fashion by means of an oblique slot (13) which is inclined towards the longitudinal axis of the steering shaft and a guide bolt (14) which engages in the oblique slot, and the sliding sleeve provides bearing which is fixed in terms of rotation but axially displaceable for the second facing steering shaft half (11b) with a second hollow shaft area (12b) which lies opposite.

3. Device according to Claim 2, characterized in that the oblique slot (13) is provided in the cylindrical wall of the first hollow shaft area (12a) of the sliding sleeve (12), and the guide bolt (14) which engages in the oblique slot (13) emerges from the first steering shaft half (11a) perpendicularly to the axis of the shaft.

4. Device according to Claim 2, characterized in that an untrue engagement relation is formed between the second hollow shaft area (12b) of the sliding sleeve (12) and the second facing steering shaft half (11b).

5. Device according to one of Claims 1 to 4, characterized in that, for the purpose of axial displacement, a guide pin (20) on a toothed rack (15) of the gearing (15a) engages in a radial groove (19) of the sliding sleeve (12).

6. Device according to Claim 1, characterized in that oblique toothing is provided between steering shaft half and sliding sleeve for the purpose of simultaneous relative axial displacement and axial rotation.

## Revendications

1. Dispositif servant à produire une correction de direction superposée dans le cas d'essieux avant et/ou arrière de véhicules à moteur avec un manchon coulissant (12) pontant une interruption d'un arbre de direction (11) qui est monté de façon à pouvoir se déplacer axialement sur l'arbre de direction et est relié aux extrémités de l'arbre de direction et qui réalise aussi dans le cas d'une poussée axiale une rotation relative simultanée des deux moitiés de l'arbre de direction (11a, 11b), dispositif caractérisé en ce qu'un actuateur (18) commandé par une commande ou une régulation du fait des données de fonctionnement du véhicule détectées pour réaliser la correction de direction, et constitué de façon hydraulique ou électrique, est en prise avec le manchon coulissant (12) au moins indirectement par l'intermédiaire d'un mécanisme d'entraînement (15a) à blocage automatique.

2. Dispositif selon la revendication 1, caractérisé en ce que le manchon coulissant (12) avec une première zone d'arbre creux (12a) reçoit une première moitié d'arbre de direction (11a) opposée et est en liaison opérationnelle mécaniquement avec celle-ci grâce à une fente oblique (13) inclinée par rapport à l'axe longitudinal de l'arbre de direction et un téton de guidage venant en prise dans la fente oblique et avec une deuxième zone d'arbre creux (12b) située en regard supporte la deuxième moitié d'arbre de direction (11b) opposée, tout en pouvant toutefois se déplacer axialement.

3. Dispositif selon la revendication 2, caractérisé en ce que la fente oblique (13) est usinée à partir de la paroi cylindrique de la première zone d'arbre creux (12a) du manchon coulissant (12) et en ce que le téton de guidage venant en prise dans la fente oblique (13) sort perpendiculairement à l'axe de l'arbre de la première moitié (11a) de l'arbre de direction.

4. Dispositif selon la revendication 2, caractérisé en ce qu'entre la deuxième zone de l'arbre creux (12b) du manchon coulissant (12) et la deuxième moitié de l'arbre de direction (11b) opposée on forme une relation de prise non ronde.

5. Dispositif selon l'une des revendications 1 à 4, caractérisé en ce que pour provoquer le déplacement axial une tige de guidage (20) vient en prise sur une crémaillère (15) du mécanisme d'entraînement (15a) dans une rainure radiale (19) du manchon coulissant (12).

6. Dispositif selon la revendication 1, caractérisé en ce que pour obtenir en même temps un déplacement axial et une rotation relatifs entre la moitié de l'arbre de direction et le manchon coulissant, on prévoit une denture oblique.
